# EUROPEAN PATENT SPECIFICATION

(11) **EP 3 559 610 B1**
(45) Date of publication and mention of the grant of the patent: **25.09.2024**
(21) Application number: 17826193.9
(22) Date of filing: 18.12.2017
(51) Int. Cl.: G01F 1/84

(54) **CORIOLIS FLOW METER FOR MEASURING PROPERTIES OF A FLUID AND METHOD THEREFOR**
CORIOLIS-DURCHFLUSSMESSER ZUR MESSUNG DER EIGENSCHAFTEN EINES FLUIDS UND VERFAHREN DAFÜR
DÉBITMÈTRE CORIOLIS PERMETTANT DE MESURER DES PROPRIÉTÉS D'UN FLUIDE ET PROCÉDÉ ASSOCIÉ

(30) Priority: 20.12.2016 US 201615384771; 20.12.2016 US 201615384806
(43) Date of publication of application: 30.10.2019
(73) Proprietor: General Electric Company, Schenectady, NY 12345 (US)
(72) Inventor: RUETTEN, Jens, 85748 Munchen (DE); LANG, Phillipp, 85748 Munchen (DE); SEELEY, Charles, Erklin, Niskayuna New York 12309 (US)
(74) Representative: Fennell, Gareth Charles
(86) International application number: PCT/EP2017/083237
(87) International publication number: WO 2018/114755

(56) References cited:
- EP-A1- 0 083 144
- DE-C1- 4 311 694
- US-A- 4 955 239
- US-A1- 2005 235 759
- US-A1- 2005 284 815
- US-A1- 2005 284 815
- US-A1- 2011 154 912
- US-A1- 2013 124 131
- US-A1- 2015 323 486
- US-A1- 2016 313 240

## Description

### BACKGROUND

This disclosure relates generally to a Coriolis flow meter for measuring one or more properties of a fluid including fluid flow, and more particularly to a Coriolis flow meter where the fluid flow sub-system is functionally separate from the mechanical oscillator sub-system, and even more particularly to a Coriolis flow meter for use in a bioprocessing system.

Coriolis flow meters are used to measure mass flow of fluids flowing through a pipeline in different industrial process engineering environments. Coriolis flow meters have one or more flow tubes, each having a set of natural vibration modes which may be of a simple bending, torsional, or twisting type. Each material filled flow tube is driven to oscillate at resonance in one of these natural vibration modes. The natural vibration modes are defined in part by the combined mass of the flow tubes and the material within the flow tubes. In most Coriolis flow meters, the fluid flows into the Coriolis flow meter from a connected pipeline on the inlet side. The fluid is then directed through the flow tube or flow tubes and delivered to a pipeline connected on the outlet side.

Typically, the flow tube is oscillated using electromagnetic excitation. When there is no flow through the Coriolis flow meter, all points along a flow tube oscillate with an identical phase. As the material begins to flow, Coriolis accelerations cause each point along the flow tube to have a different phase with respect to other points along the flow tube. Motion sensors on the flow tube produce sinusoidal signals representative of the motion of the flow tube. The phase difference between the sensor signals is proportional to the mass flow rate of the material flowing through the flow tube or flow tubes.

Most Coriolis flow meters are made of metal such as aluminum, steel, stainless steel and titanium. It is known to use Coriolis flow meters having different flow tube configurations. Among these configurations are single tube, dual tubes, straight tube, curved tube, and flow tubes of irregular configuration. The flow tubes also function as a mechanical oscillator.

In these prior art Coriolis flow meters, the frequency range of the oscillation modes is therefore dominated by the design and material of the flow tube, and therefore, choice of material, geometry and thickness of the flow tube have to be tailored to composition, pressure and temperature range, or other such properties of the fluid under test. US 2005/284815 A1 discloses a micro-machined Coriolis flowmeter to be used in a dialysis treatment system, comprising a dialyzer. Sensing elements are located both on the free-standing portion forming the flow channel and on the silicon substrate. A monitoring unit collects the flow rate data and provides feedback control for the flow.

### BRIEF DESCRIPTION

According to the invention, a bioprocessing system for monitoring one or more fluid properties of a fluid used in a bioprocess unit is disclosed. The bioprocessing system includes an inlet tubing and an outlet tubing of the bioprocess unit, where the inlet tubing is connected to an inlet process connect, and the outlet tubing is connected to an outlet process connect. The bioprocessing system includes a Coriolis flow meter coupled to the inlet process connect and the outlet process connect, wherein the Coriolis flow meter comprises a fluid flow sub-system to receive and retain the fluid in at least one flow conduit, a mechanical oscillator sub-system comprising:a mechanical oscillator linked with the fluid flow sub-system in a closed-loop arrangement for transmission of oscillations to the fluid and receipt of a Coriolis response from the fluid, one or more actuators, and a sensing sub-system, wherein the mechanical oscillator sub-system and the fluid flow sub-system are functionally separate, and an electronics circuitry coupled to the mechanical oscillator sub-system, and configured for obtaining one or more measurements representative of the one or more fluid properties of the fluid, and a monitoring unit configured for receiving the measurements representative of the one or more fluid properties of the fluid, and configured to use the measurements to control the bioprocess.

In yet another aspect, a method for monitoring one or more fluid properties of a fluid in a bioprocess of a bioprocessing system is described herein. The method includes coupling an inlet tubing and an outlet tubing of a bioprocess with a Coriolis flow meter using process connects, wherein the Coriolis flow meter comprises a fluid flow sub-system to retain the fluid in at least one flow conduit,a mechanical oscillator sub-system comprising:a mechanical oscillator linked with the fluid flow sub-system in a closed-loop arrangement for transmission of oscillations to the fluid and receipt of a Coriolis response from the fluid, one or more actuators, and a sensing sub-system, wherein the mechanical oscillator sub-system and the fluid flow sub-system are functionally separate, and an electronics circuitry coupled to the mechanical oscillator sub-system; transmitting an electrical signal to trigger oscillations in the fluid through the mechanical oscillator sub-system; receiving a Coriolis response from the fluid through the mechanical oscillator sub-system; processing the Coriolis response to obtain one or more measurements representative of the one or more fluid properties of the fluid; and monitoring the bioprocess using the one or more measurements. The one or more fluid properties comprise at least one of mass flow rate, density, or temperature of the fluid.

### DRAWINGS

These and other features, aspects, and advantages of the present invention will become better understood when the following detailed description is read with reference to the accompanying drawings in which like characters represent like parts throughout the drawings, wherein:
FIG. 1 is a diagrammatic representation of an embodiment of a Coriolis flow meter in accordance with some embodiments;
FIG. 2 is a block diagram representation of an embodiment of the Coriolis flow meter in accordance with some embodiments;
FIGs. 3-9 are diagrammatic representations of some example implementations of the Coriolis flow meter in accordance with some embodiments;
FIG. 10 is a block diagram representation of an embodiment of a bioprocessing system that uses the Coriolis flow meter of FIG. 2, in accordance with some;
FIG. 11 illustrates a flowchart showing steps for a method for measuring one or more properties of a fluid including fluid flow using a Coriolis flow meter, in accordance with some embodiments;
FIG. 12 illustrates a flowchart showing steps for a method for measuring one or more properties of a fluid including fluid flow in a bioprocess of a bioprocessing system, in accordance with some embodiments; and
FIG. 13 illustrates a block diagram representation of another embodiment of a bioprocessing system that shares a fluid flow sub-system with the Coriolis flow meter of FIG. 2, in accordance with some embodiments.
FIG. 14 is a block diagram representation of an embodiment of the Coriolis flow meter in accordance with some embodiments;
FIG. 15 is a block diagram representation of one implementation of the embodiment of FIG. 14;
FIGs. 16-19 are diagrammatic representations of some example implementations of the Coriolis flow meter in accordance with some embodiments;

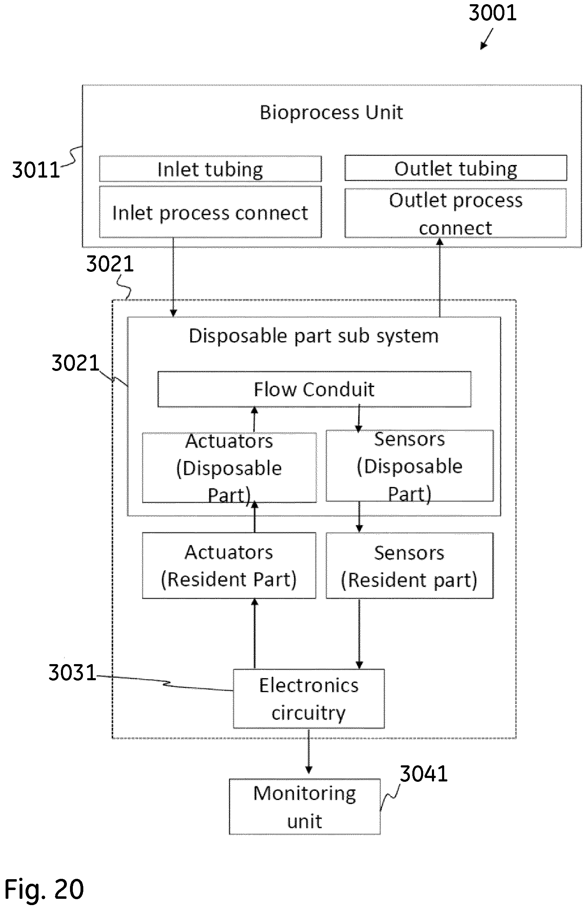

FIG. 20 is a block diagram representation of an embodiment of a bioprocessing system that uses the Coriolis flow meter of FIG. 14.
FIG. 21 shows a single use flow kit according to the invention.

### DETAILED DESCRIPTION

As mentioned hereinabove, a Coriolis flow meter is used for measuring fluid and fluid flow properties in a process in any processing system that uses fluids, such as a bioprocessing system. The different embodiments presented herein describe advantageous features for the Coriolis flow meter that alleviate constraints related to the choice of applicable materials and manufacturing processes required for manufacturing the Coriolis flow meter.

It would be appreciated by those skilled in the art that each process may have its own requirements to which the Coriolis flow meter must adhere to, for ensuring accurate measurements, process integrity as well as longevity of the meter itself. For example, in one process, contamination of the fluid is highly undesirable, since an ultra-high level of purity must be maintained in the fluid returned by the Coriolis flow meter, back to the process. The embodiments presented herein address such requirements. In some other processes bio-sensitivity is important, and in some other processes, the fluid is corrosive, some of the embodiments presented herein also address such requirements. In some other processes, the nature of the process may require the flow conduit to be configurable in different geometries, and yet in some other processes, there may be a need of having the flow conduit disposable to allow only a single time use. Select embodiments presented here also address such requirements.

The embodiments described herein are useful for measurements of fluid properties such as mass flow rates, density, temperature, and the like, and are especially useful for several bioprocessing systems, that involve processes sensitive to contamination with both impurities as well as active biological material, as is common in the production in pharmaceuticals, and in cell biology.

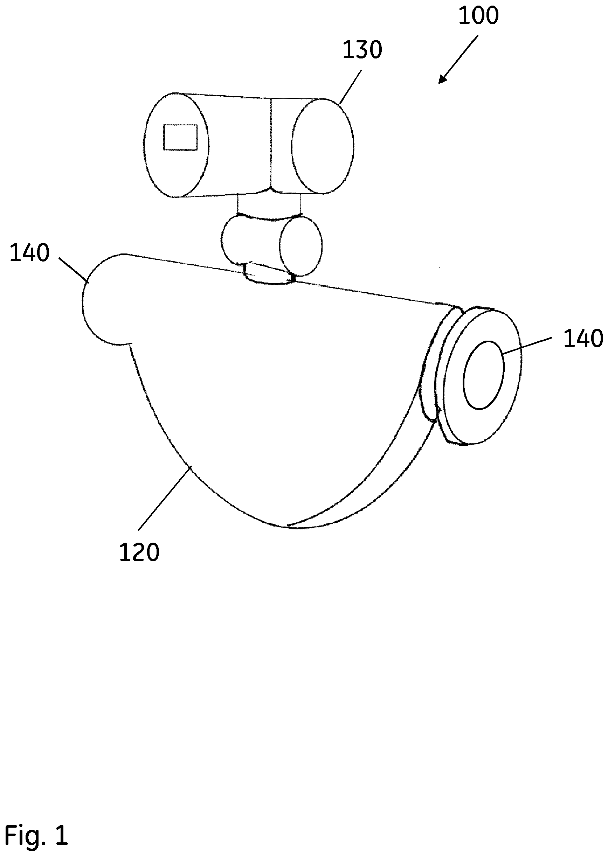

FIG. 1 is a diagrammatic representation of an embodiment of a Coriolis flow meter **100,** having an enclosure **120** to house the mechanical oscillator sub-system, and the fluid flow sub-system; an enclosure **130** to house electronics circuitry that is used to operate the mechanical oscillator sub-system, and process connects **140** that connect to an inlet tubing and an outlet tubing (not shown) of a process in which the fluid and fluid flow is being monitoring, such as a bioprocess in a bioprocessing system. It may be appreciated by those skilled in the art that the embodiment of FIG.1 is a non-limiting example of housing different components of the Coriolis flow meter **100,** and based on the end use application the enclosures **120** and **130** and process connects **140** may be configured in a different manner.

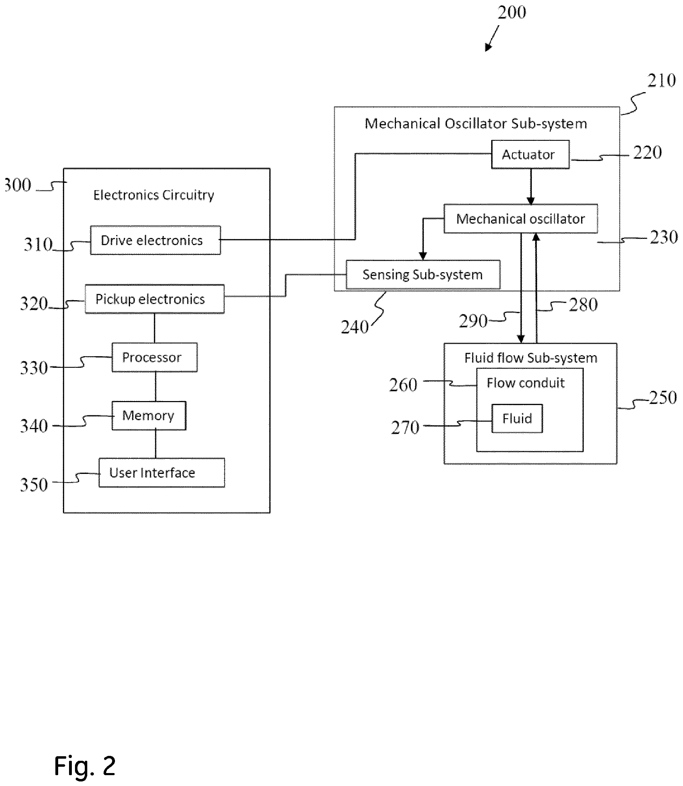

FIG. 2 is a block diagram representation of an embodiment of the Coriolis flow meter **200** that includes a mechanical oscillator sub-system **210.** The mechanical oscillator sub-system **210** includes one or more actuators **220,** a mechanical oscillator **230** and a sensing sub-system **240.** The one or more actuators **220** are used to induce oscillations of an appropriate amplitude over a required frequency range in the mechanical oscillator **230.** The one or more actuators **220** may be directly coupled to the mechanical oscillator **230** (e.g. an electromagnetic coil), or may be indirectly coupled using external actuating components (e.g. a mechanical coupling, ferromagnetic parts, and the like). The sensing sub-system **240** includes pick-up sensors, for example, permanent magnet based sensors, or optical sensors, and associated components.

As shown in FIG. 2, the Coriolis flow meter **200** includes a fluid flow sub-system **250** that is functionally separate from the mechanical oscillator sub-system **210,** and removes the constraints of the prior art where the fluid flow system itself is used as a mechanical oscillator, and both are functionally integral. Functionally separate herein implies that the fluid flow sub-system is a distinct component in itself, distinct from the mechanical oscillator sub-system.

The fluid flow sub-system **250** is configured to provide a flow path for the fluid **270** that is retained in a flow conduit **260.** The flow conduit **260** is configured in a shape of commonly employed principles for Coriolis measurement, including but not limited to single, dual or multi loop configurations, split flow, straight tube, counter- or co-flow configurations. In some implementations, the flow conduit is made from, for example, polymer, whose influence on the oscillation modes (harmonic frequencies) of the mechanical oscillator is not dominant. The flow conduit material in some examples, is tailored to specific requirements of the bioprocessing application, such as temperature, pressure, and the characteristics of the fluid to be measured (e.g. mass flow rate, density, corrosivity etc). The material can suitably be a polymeric material complying with the requirements of USP VI (US Pharmacopeia), in particular with respect to levels of leachables and extractables. Furthermore, in some examples, the material of the flow conduit has a significantly lower stiffness than the material employed for the mechanical oscillator **230.**

The mechanical oscillator sub-system **210** is disposed in proximity to the fluid flow sub-system **250,** and the mechanical oscillator sub-system **210** is configured to induce oscillations in the fluid flow sub-system **250,** and is further configured to detect a Coriolis response from the fluid **270.** More specifically, the mechanical oscillator **230** is linked with the fluid flow sub-system **250** and is configured to provide a closed-loop arrangement for transmission of oscillations to the fluid **270** and receipt of the Coriolis response from the fluid **270.**

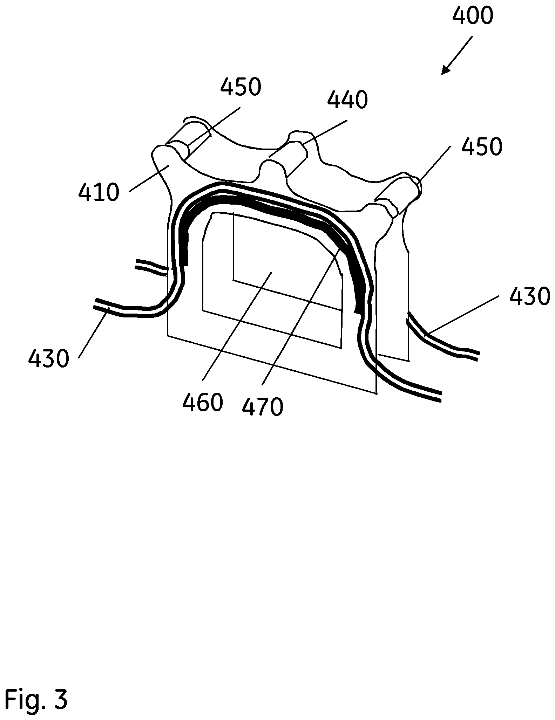

In some implementations, the fluid flow sub-system **250** is directly coupled to the mechanical oscillator **230** body, such that the oscillations of the mechanical oscillator are applied to the flow conduit **260** and the fluid therein. Some examples of such implementations are shown in FIGs. 3-8.

The Coriolis flow meter **200** also includes an electronics circuitry **300** coupled to the mechanical oscillator sub-system **210** or the disposable part sub-system. The electronics circuitry **300** includes drive electronics **310** to trigger the one or more actuator(s) **220** to generate oscillations in the mechanical oscillator **230** of the desired frequency and magnitude. The Coriolis flow meter **200** further includes pick-up electronics **320** to receive the Coriolis response from the sensing sub-system **240.** The electronics circuitry 300 further includes a processor **330** to process the Coriolis response received from the sensing sub-system **240** to generate one or more measurements representative of one or more properties of the fluid including fluid flow. These measurements are displayed using a user interface **350.** The electronics circuitry **300** also includes a memory **340** to store the measurements for further use and communication, to store data useful for the drive electronics **310,** and the pick-up electronics **320.**

Under operation, the electronics circuitry **300** triggers the one or more actuator(s) to generate oscillations in the mechanical oscillator **230,** which are transferred to the fluid **270** in the flow conduit **260,** as shown by arrow **290** in FIG. 2. Due to these oscillations, the Coriolis response (vibration amplitude and phase) is generated in the fluid and travels back to the mechanical oscillator **230,** as shown by arrow **280,** and is sensed by the sensing sub-system **240.** The sensed Coriolis response is transmitted to the electronics circuitry **300** for further processing to obtain the measurements of the one or more properties of the fluid including fluid flow.

The configuration presented in FIG. 2 allows for functional separation of the mechanical oscillation sub-system from the fluid flow sub-system in the Coriolis flow meter. The functional separation extenuates the influence of material properties of the fluid flow sub-system on harmonic frequencies of oscillations that are used to generate the Coriolis response, which in turn is used for measurements of different properties of the fluid and fluid flow.

Separating the functions of the mechanical oscillation sub-system from the fluid flow sub-system, also allows for separate optimization of the materials for the mechanical flow sub-system and for the fluid flow sub-system, to achieve better product cost and unlocks potential for new applications which could not be addressed previously due to limitations of material choice.

The Coriolis flow meter described hereinabove and in the embodiments described herein after, has an advantage of having a modular construction, where the mechanical oscillator sub-system, and the fluid flow sub-system are functionally separate, as well as are modular and allow modular integration. The modular feature described herein provides advantages both from manufacturing aspects, and servicing aspects, and the functional separation provides technical advantages that ensures isolation of the fluid containment part that is encompassed in the fluid flow sub-system, from the mechanical oscillation sub-system.

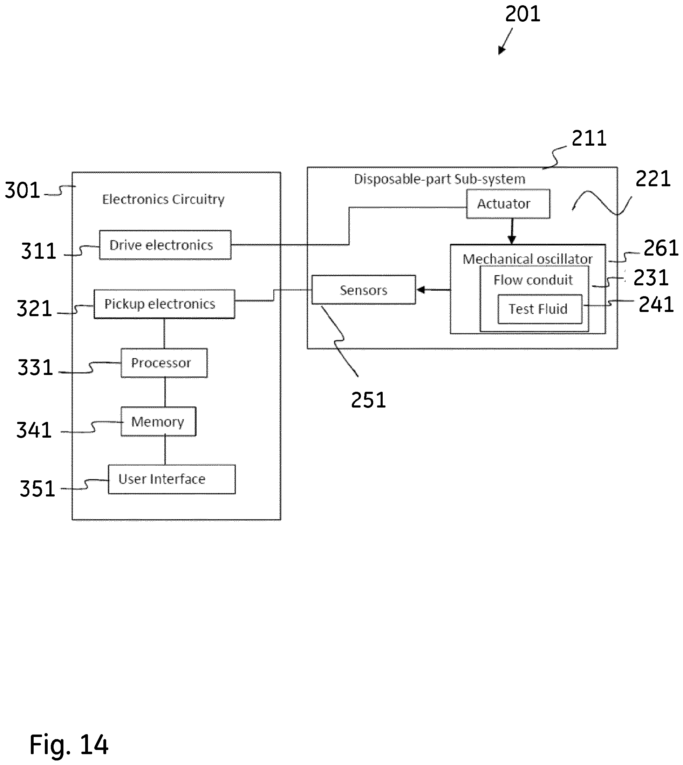

FIG. 14 is a block diagram representation of an embodiment of the Coriolis flow meter **201** that includes a disposable-part sub-system **211.** The disposable-part sub-system **211** includes one or more actuators **221,** a flow conduit **231** for retaining a fluid **241,** and may include one or more sensors **251.** It would be appreciated by those skilled in the art, that one or more components of the disposable-part sub-system are configured as disposable parts, and the others are configured as re-usable resident parts.

The disposable-part sub-system **211** has an advantage that at least one of the flow conduit, the one or more actuators, or the one or more sensors is configured as a disposable part, and other parts are configured as reusable resident parts. It would be appreciated by those skilled in the art that the disposable part(s) may be replaced at very low cost in intervals governed by the specific process needs. In addition, in some implementations, the material of the flow conduit **231** may be changed (glass or polymer or silicone or metal), without the need for replacement of the entire Coriolis flow meter. The disposable-part sub-system allows obtaining high accuracy measurements, reusing of part of the Coriolis flow meter **201,** provides a flexibility for single-use applications, and achieves cost and material savings.

Referring to FIG. 14, in some implementations, the flow conduit **231** may be coupled with a mechanical oscillator **261** or form a unitary unit with mechanical oscillator **261** and thus take the form of a rigid, oscillating tubing. The one or more actuators **221** are used to induce oscillations of an appropriate amplitude over a required frequency range in the fluid **241** through the mechanical oscillator **261** and the flow conduit **231.** The one or more sensors **251** are configured for receiving a Coriolis response from the fluid through the flow conduit. The one or more sensors include, for example, electromagnetic sensors, or optical sensors, and associated components.

The Coriolis flow meter **201** also includes an electronics circuitry **301** coupled to the or the disposable part sub-system. The electronics circuitry **301** includes drive electronics **311** to trigger the one or more actuator(s) **221** to generate oscillations in the mechanical oscillator **231** of the desired frequency and magnitude. The Coriolis flow meter **201** further includes pick-up electronics **321** to receive the Coriolis response from the sensing sub-system **241.** The electronics circuitry **301** further includes a processor **331** to process the Coriolis response received from the sensing sub-system **241** to generate one or more measurements representative of one or more properties of the fluid including fluid flow. These measurements are displayed using a user interface **351.** The electronics circuitry **301** also includes a memory **341** to store the measurements for further use and communication, to store data useful for the drive electronics **311,** and the pick-up electronics **321.**

The different embodiments of the Coriolis flow meter as described herein and its different components are described in more detail in reference to FIGs. 3-FIG. 9.

FIG. 3 is a diagrammatic representation of some components of a Coriolis flow meter **400.** As shown, a mechanical oscillator **410** in this implementation is configured as a twin frame having an open profile **460,** and providing a twin U-shape framework for the fluid flow sub-system **470** that includes a pair of flow conduits **430.** An electromagnetic coil assembly **440** (electromagnet coil and permanent magnet) is used as the actuator, and pair of similar components **450** are used as sensors of the sensing sub-system **240** that are positioned to directly contact the mechanical oscillator **410.**

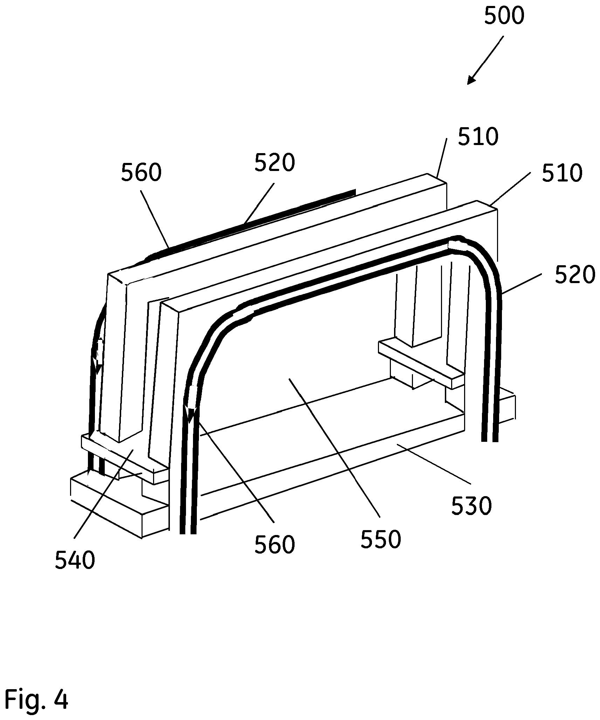

FIG. 4 is another diagrammatic representation of some components of a Coriolis flow meter **500.** As shown, a mechanical oscillator **510** in this implementation is configured as paired rectangular frame having an open profile **550.** The paired rectangular frame in one example is made from polycarbonate. A paired configuration of the fluid flow sub-system **520** is provided with respective flow conduits **560.** The flow conduits in one example are made of silicone. A platform **530** is used to mount the mechanical oscillator **510** and the fluid flow sub-system **520.** Brackets **540** are used to hold the mechanical oscillator **510.** Other components of actuators and sensors may be provided in the same configuration as shown in FIG. 3, or mounted on the platform **530.** In this example, the flow conduit is single use and disposable.

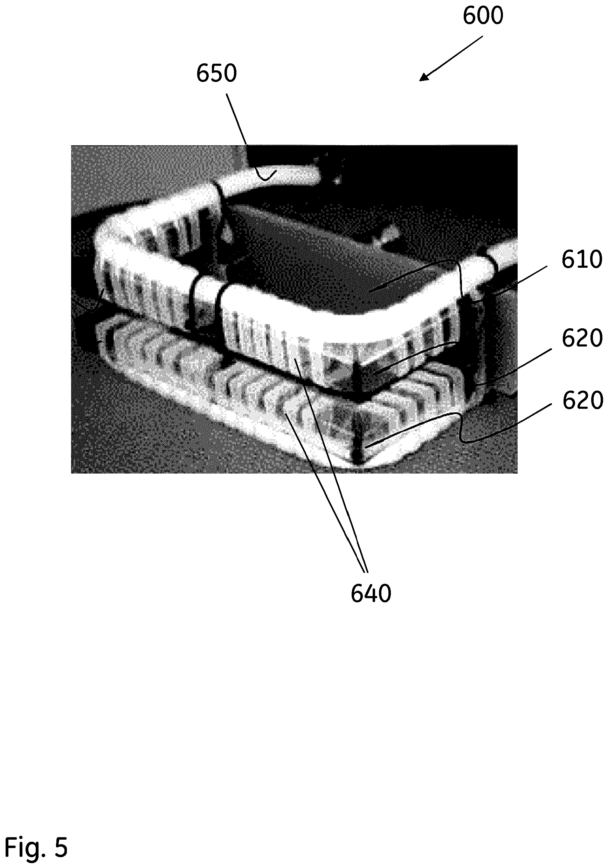

FIG. 5 is an experimental implementation of the configuration of FIG. 4 for implementing some components of a Coriolis flow meter **600.** As shown, a mechanical oscillator **620** in this implementation is configured as paired rectangular frame having an open profile **610.** A paired configuration of the flow conduits **650,** is provided as a fluid flow sub-system, and a wire bundle wrap is **640** is used to attach the flow conduit **650** to the mechanical oscillator **620.** In this example, the flow conduit is single use and disposable.

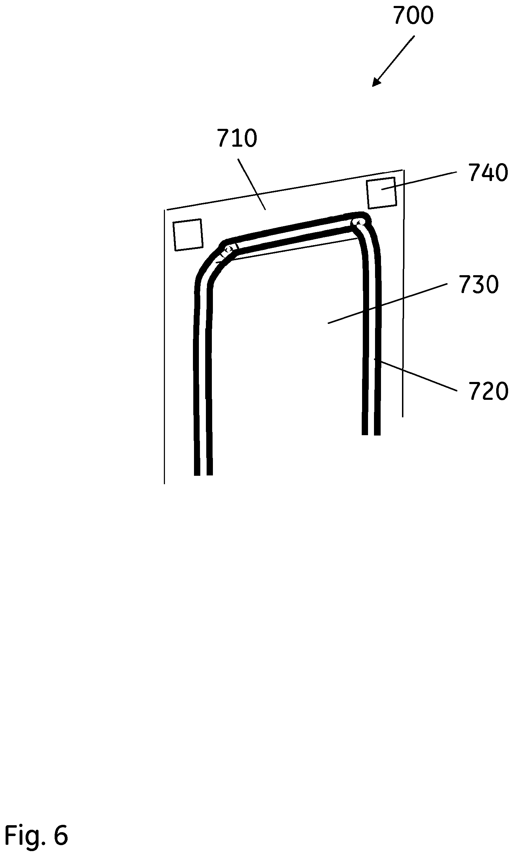

FIG. 6 is yet another configuration for implementing some components of a Coriolis flow meter **700.** As shown, a mechanical oscillator **710** is configured as a singular frame having an open profile **730.** A paired configuration of the flow conduits **720,** is provided as a fluid flow sub-system. In this example, the mechanical oscillator **710** is made of sheet metal substrate, the flow conduit is made from hard plastic, and the pickup sensing has been realized by a non-contact optical method, the laser sensor targeting the reflective patches **740** is not shown in the photograph.

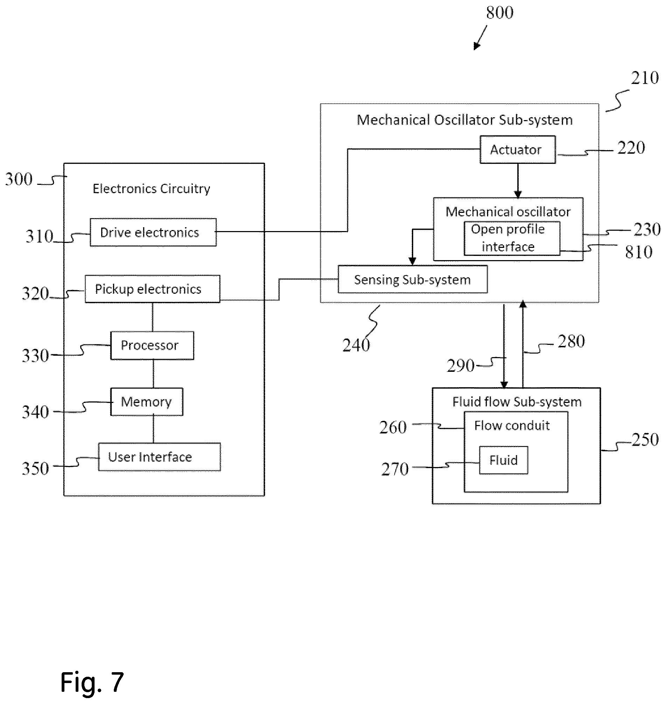

FIG. 7 is a diagrammatic representation of a Coriolis flow meter **800,** which is similar to the Coriolis flow meter **200** of FIG. 2, with the additional feature of the open profile interface **810,** that in some implementations, can be a separate part or component of the mechanical oscillator **230.** The open profile interface advantageously links the fluid flow sub-system in a closed-loop arrangement to the mechanical oscillator sub-system described hereinabove.

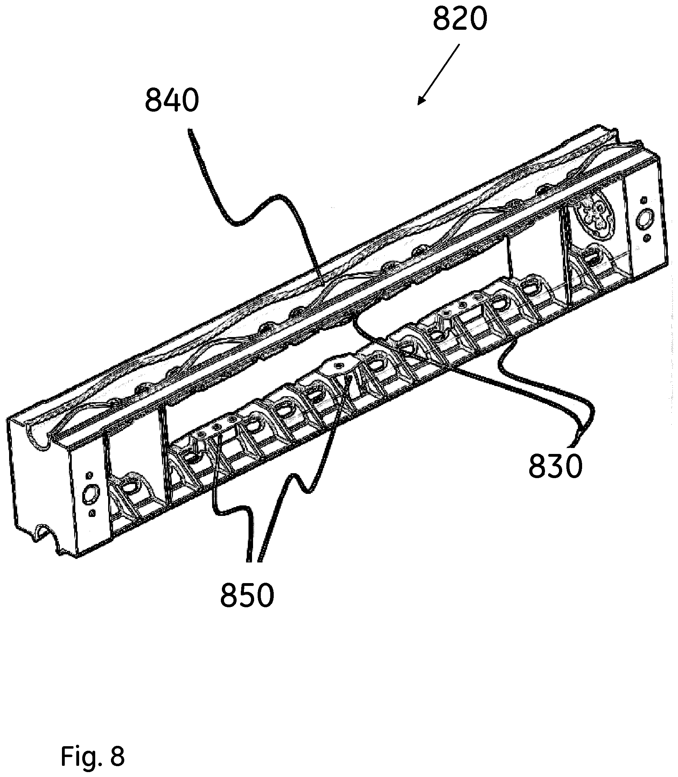

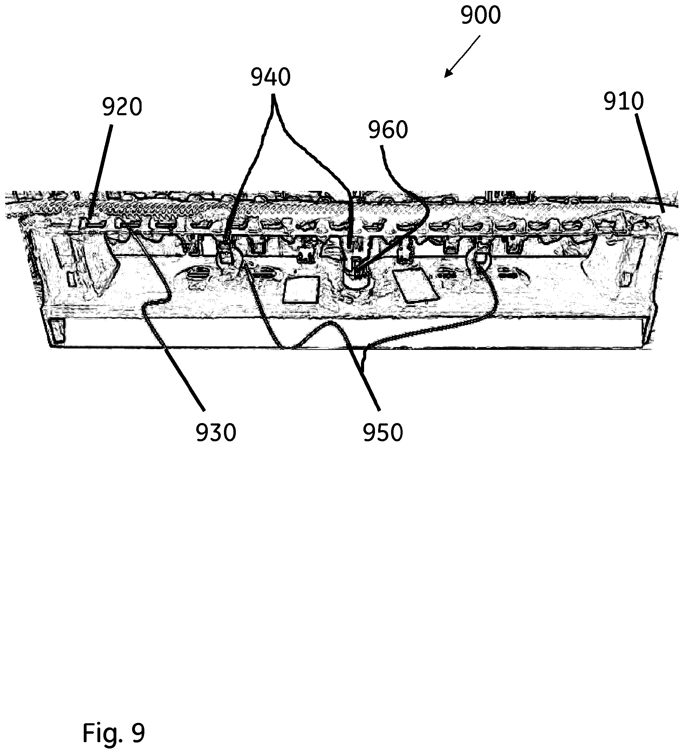

All other components of the Coriolis flow meter **800** of FIG. 7 are same as explained in reference with the FIG. 2 embodiment. FIG. 8 and FIG. 9 are two example representations of the open profile interface **810** that is mountable on the mechanical oscillator and holds the flow conduit described in previous embodiments. In some implementations, the open profile interface and the mechanical oscillator are a unitary unit, and in some they are discrete and are fitted onto each other.

FIG. 8 is a diagrammatic representation for implementing some components of a Coriolis flow meter **820** which includes the mechanical oscillator **830** providing a dual parallel linear framework which in this embodiment are a unitary unit with the open profile interface **840** configured to hold two flow conduits (not shown), and the mounting features for the sensors and actuators **850.** It shall be noted that this particular design is fully symmetrical with regard to the horizontal plane.

Fig. 9 is yet another configuration for implementing some components of a Coriolis flow meter **900.** In this configuration, the flow conduit **910** is inserted into the open profile interface **920** forming a singular linear framework. The oscillator **930** is defined by steel inserts on either side of the flow conduit and fully integrated into the open profile interface, which furthermore includes mounting features **940** to couple the sensors **950** and the actuator **960** at well-defined positions.

As would be appreciated by those skilled in the art, the open profile interface of FIG. 7- FIG. 9 is disposed in close physical contact with the flow conduit of the Coriolis flow meter, but is not in direct contact with the fluid, that is subject to measurement for mass flow rate.

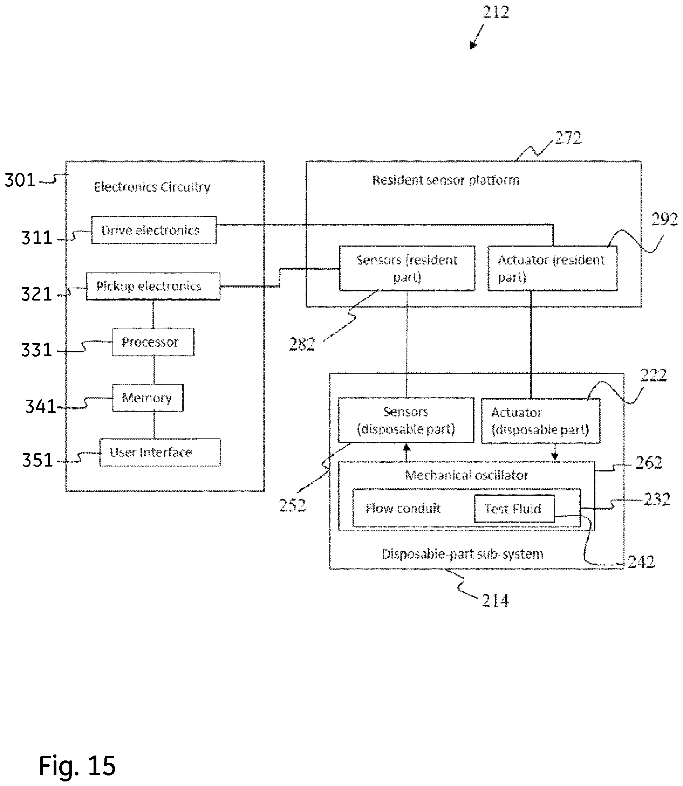

FIG. 15 illustrates embodiments having a disposable-part sub system **214** that includes disposable parts of one or more actuators, shown by block **222,** a flow conduit **232** for retaining a fluid **242,** and coupled to or with a mechanical oscillator **262.** In one example, the disposable-part sub-system **214** also includes disposable parts of one or more sensors, shown by block **252.**

In addition, the Coriolis flow meter **212** also includes a resident sensor platform **272** that includes reusable and resident parts of sensors, shown by block **282,** and reusable and resident parts of actuators, shown by block **292.** The one or more actuators **(222** and **292)** are used to induce oscillations of an appropriate amplitude over a required frequency range in the fluid **242** through the mechanical oscillator **262** and the flow conduit **232.** The resident parts of actuators, shown by block **222,** may in one example take the form of an electromagnetic coil, coupling the excitation force required to induce the oscillation by means of a magnetic field to the disposable parts of the actuators shown by block **222** which is situated in direct contact with the mechanical oscillator **262.**

The one or more sensors (disposable part, **252** and resident part, **282)** are configured for receiving a Coriolis response from the fluid through the flow conduit. The one or more sensors include, for example, electromagnetic sensors, or optical sensors, and associated components. The disposable parts of the sensors shown by block **252** are preferably, but not necessarily, passive elements, such as permanent magnets for electromagnetic sensing methods, or reflective elements for optical sensing methods.

The embodiments described herein above may include additional attachments, clamps and fixtures, such as but not limited to screws, bolts and nuts, adhesives, or may have snap-in grooves and the like to position the mechanical oscillator sub-system, the fluid flow sub-system, and the electronics circuitry.

It would be appreciated by those skilled in the art that the embodiments of FIG.3 -FIG 9 are provided by way of examples, and other pre-defined shapes for the mechanical oscillator and flow conduit may be configured based on use environment.

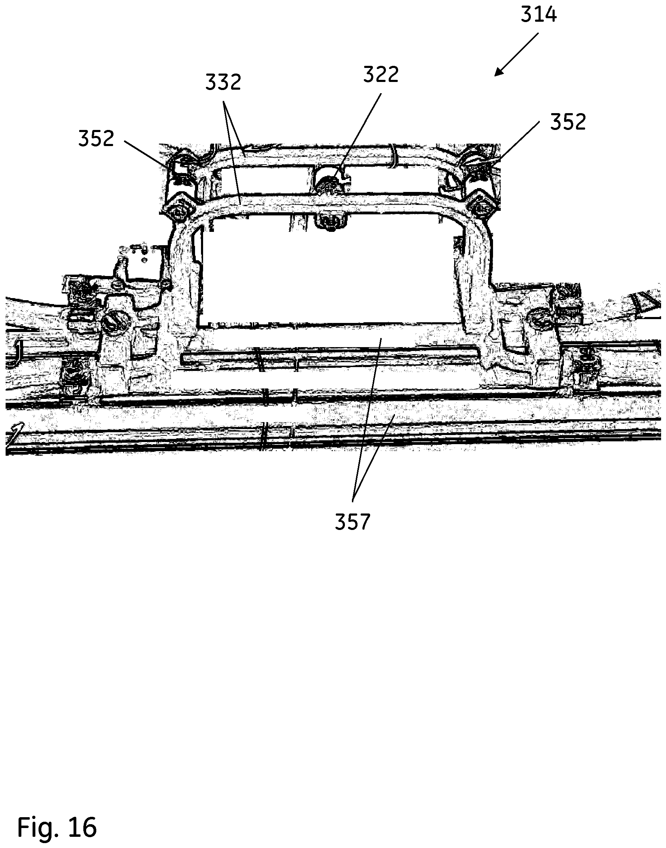

FIG. 16 is a photographic representation of an implementation of the disposable-part sub-system **314.** As shown, the disposable-part sub-system **314** includes a U-shaped flow conduit **332** in a twin flow path configuration, the flow conduit **332** is reusable in some implementations, and in some other implementation it is a disposable part. The flow conduit is made of polymer in one example, and made of silicone in yet another example, and of glass in still yet another example.

The other disposable parts in the configuration shown in FIG. 3 include the actuator **322,** which is an electromagnetic coil, in one example. Still other disposable parts include the sensors **352** which are permanent magnets in one example. A frame **357** is used to mount the flow conduit **332** onto which the actuator **322** and sensors **352** are mounted by using screws or other attachment means.

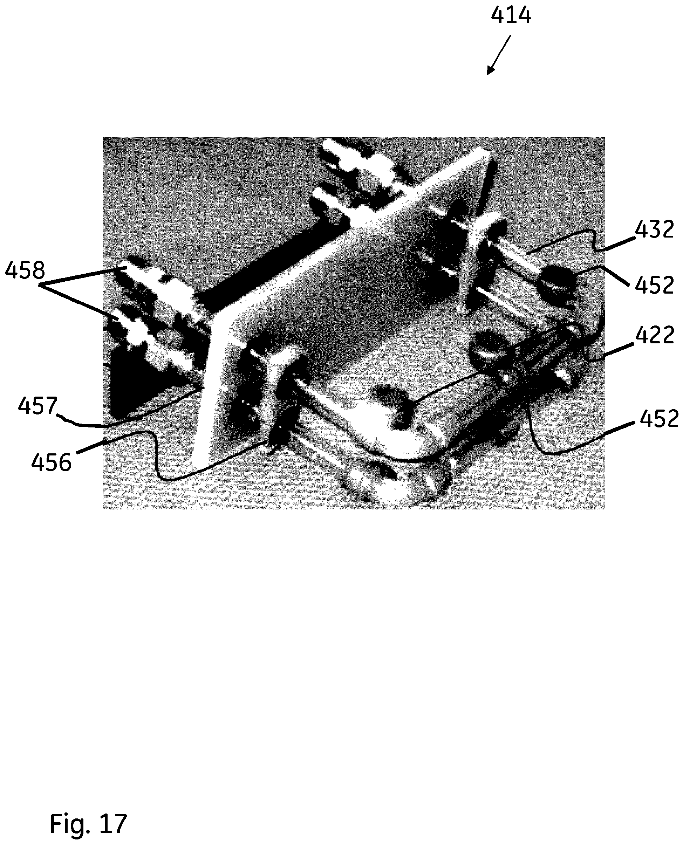

FIG. 17 is another photographic representation of some components of the disposable-part sub-system **414.** As shown, disposable-part sub-system **414** in this implementation includes a U-shaped paired configuration of the flow conduit **432,** and is reusable, and acts as the mechanical oscillator. In this configuration, also the disposable parts include the actuator **422,** which is an electromagnetic coil, in one example. Other disposable parts include the sensors **452** which are permanent magnets in one example. Brackets **456** are used to hold the flow conduit **432** that passes through a frame **457,** to connect with process connects **458.**

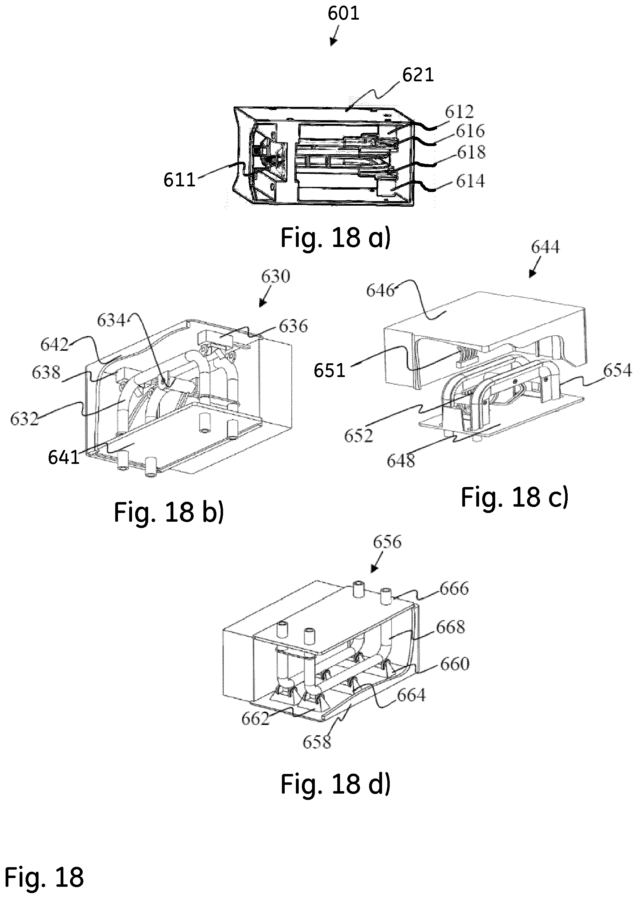

FIG. 18 is a diagrammatic representation of few configurations for implementing some components of the disposable-part sub-system **214.** FIG. 18 (a) illustrates a configuration **601,** that includes a frame **621** that is configured as a cartridge and is reusable. The flow conduit **611** is the disposable part, and the actuators **616** and **618,** as well as the sensors, **612** and **614** are integrated into frame **621** and are the reusable parts.

FIG. 18(b) illustrates another configuration **631** that includes the flow conduit **632** along with the actuator **634,** as the disposable parts. The sensors **636** and **638** are optical sensors and are mounted on the frame **642** and are reusable. A base **641** forms a removable but reusable part of the frame **642,** for holding the flow conduit **632.**

FIG. 18(c) illustrates another configuration **644** that includes the flow conduit **654** that is a disposable part, whereas the actuators and sensors (not marked for clarity) are provided on a base **648** as fixed reusable parts. The base **646** receives and holds the flow conduit **654.** A housing **646** is provided to receive the parts mounted on the base **648.** The housing includes connectors **651** and **652,** which in one example are mechanical connectors for allowing a snap-in configuration for fitting the base **648** into the housing **646.** In some other implementation, connectors **651** and **652** electrical connectors configured in a mother-daughter pair, where the connector **652** is a daughter electrical connector of the mother-daughter pair, and the connector **651** is a mother electrical connector of the mother-daughter pair.

FIG. 18(d) illustrates another configuration **656** where the flow conduit **668** is mounted on the frame **666** and is the reusable part. The actuator **664** and the sensors **658** and **660** are magnets are the disposable parts, and are mounted on a reusable frame **658.**

It would be appreciated by those skilled in the art that the configurations described hereinabove, are only some non-limiting examples, and other flow path geometries for Coriolis measurement (e.g. single, dual or multi loop configurations, split flow, straight tube, counter- or co-flow) may be implemented in a similar manner.

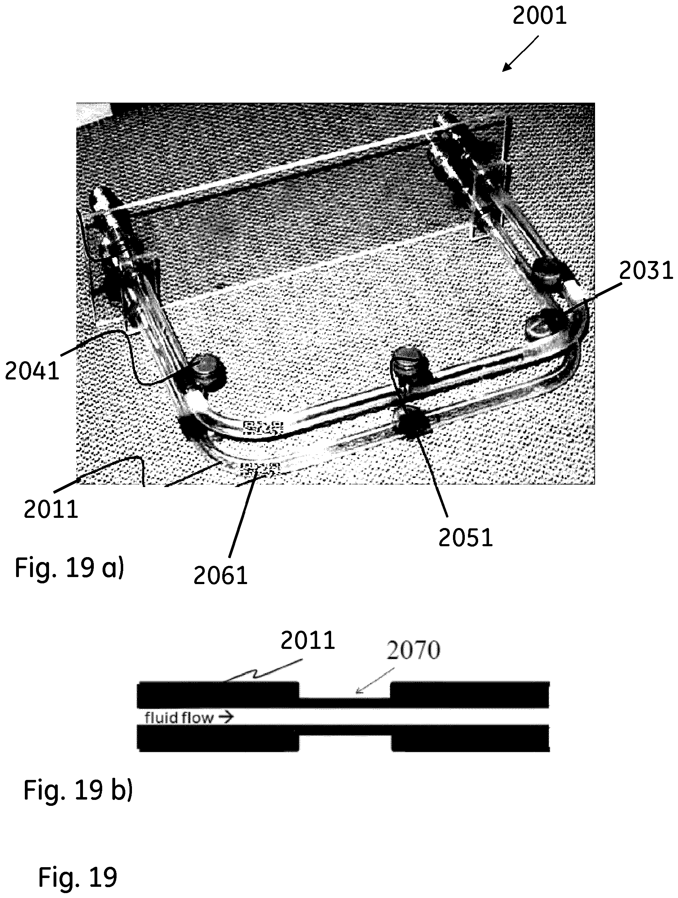

FIG. 19 (a) is a photographic representation of another implementation showing some components of the disposable-part mechanical oscillator **2001.** A flow conduit **2011** made of glass is used in this implementation and is mounted on a frame **2051.** The magnets **2031, 2041,** and **2051** that serve as actuators and sensors are clamped on the flow conduit **2011.** In some configurations, the flow conduit **2011** is disposable.

Use of glass for the flow conduit (referred herein as glass flow conduit) in the above embodiments has several advantages due to thermal conductivity, electrical non-conductivity, relative corrosion safety, transparency, of glass flow conduit, that enables additional optical or spectral measurements.

For example, usually for monitoring the process, temperature compensation is usually critical, and in prior art Coriolis flow meters, a separate temperature sensor is included to compensate for the fluid's temperature change induced by the flow conduit material properties such as stiffness. Use of glass flow conduit removes the necessity of the traditional temperature sensor, as the glass flow conduit allows direct optical observation and optical temperature measurements of the fluid. Also, the glass flow conduit enables measurements such as nuclear magnetic resonance based fluid characterization measurements along with the traditional mass flow measurements by the same Coriolis flow meter.

As a further advantage, transparency of the glass flow conduit to visible light spectrum, allows for inspection for any cracks in the flow conduit, by principle of optical scattering produced by interaction of irradiating light with small cracks.

The glass flow conduit, as a disposable part, meets the one-time use requirement, for some applications, for example in medical tests where bodily fluid is required to be analyzed for determining a health-related parameter. In some of these applications, it is often desirable to do an analysis of the fluid as its mass flow rate is being measured. Likewise, it can be advantageously used in bioprocess applications to measure different properties of a bioprocess fluid in conjunction with the mass flow rate. In one embodiment, an insight portal, shown by reference numeral **2070** in FIG. 19(b), may be provided on an outer surface of the glass flow conduit **2011** to enable such analyses. The insight portal includes one or more small regions provided as a groove in the glass flow conduit **2011,** in one non-limiting example, departing from the conventional constant outer curvature for the flow conduit, and may be in the form of a flattened groove as shown in FIG. 19 (b). The inner diameter of the flow conduit is not altered, and therefore, the insight portal **2070** causes no narrowing of the flow conduit.

In some implementations, a light source (not shown) may be used to emit radiation through the insight portal **2070** that impinges on the fluid inside the flow conduit **2011,** and the reflected radiation is received through a detector (not shown), and processed for measuring select properties for the analysis of fluid, such as opacity, presence or absence of certain elements or compounds, and color of the fluid, and other such properties. It would be understood by those skilled in the art that the radiation may include laser generated light, non-coherent light, spectrally shaped light, microwave radiation, or gamma radiation.

In yet another embodiment, the insight portal **2070** may be used to position a coil (not shown) for generating a magnetic field using a current driver (not shown). Because the glass flow conduit is non-conductive and has negligible permeability, the current driver may produce a steady or time-varying magnetic field within the fluid. Such a magnetic field may be used in conjunction with other sensors disposed external to the glass flow conduit including fluid characterization and analysis of the fluid, complementary and simultaneously with mass flow estimation.

In some other embodiments, useful for inventory management, the glass flow conduit may include a tag (shown as **2061** in FIG. 19(a)), such an RFID (Radio Frequency Identification) tag that is readable using an electronic reader. The tag in one example may include indicium that is printed, etched, or otherwise emplaced on the glass flow conduit **2011.** The readout from the tag may be processed by an external processor to localize a placement and orientation of the glass flow conduit, or for moving the glass flow tube using means such as robotic arm to a desired location.

In still another embodiment, the tag **2061** is initially invisible indicium, that only becomes visible after the glass flow tube **2011** is sterilized by exposure to an ultraviolet light source. The advantage of this embodiment, as would be appreciated by those skilled in the art, is the added confirmation of a positive indication of a completion of a sterilization protocol, which may be a requirement for certain applications.

The flow conduit made of glass provides several other advantages, that allow greater ease and accuracy in measurements, such as a lagging thermodynamic interaction between the flow conduit made of glass and the fluid, an expected chemical isolation between the flow conduit made of glass and the fluid, and a reasonable production cost especially, in light of the one-time usage, where the flow tube made of glass is the disposable part.

It would be appreciated by those skilled in the art that the embodiments of FIG.16 -FIG 19 are provided by way of examples, and other pre-defined shapes for the flow conduit may be configured based on use environment.

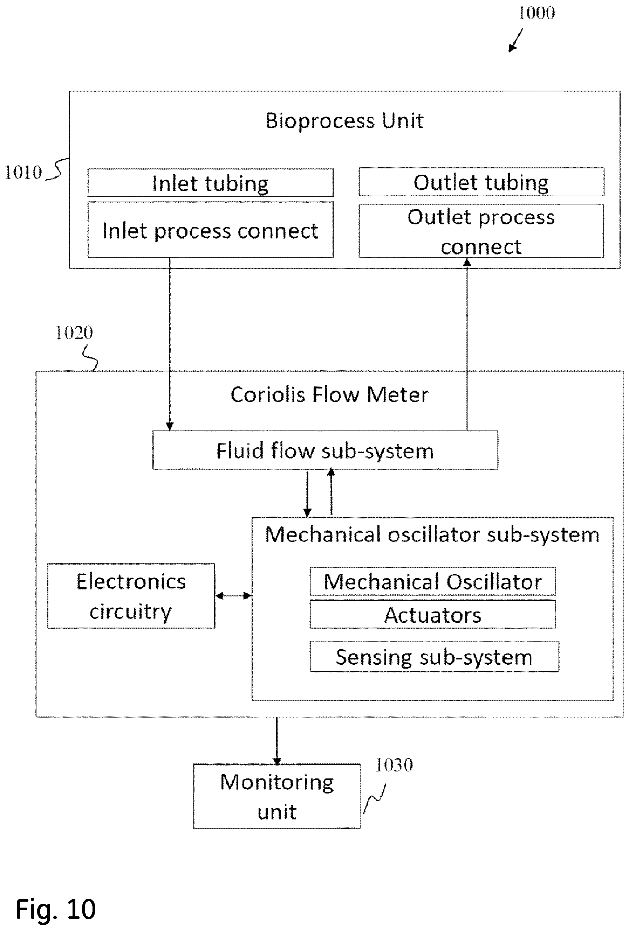

In another aspect, FIG. 10 provides a diagrammatic representation for a bioprocessing system **1000** for monitoring one or more properties of a fluid including fluid flow used in a bioprocess of a bioprocess unit **1010.** The bioprocess unit **1010,** as shown, includes the inlet tubing with an inlet process connect, and an outlet tubing with an outlet process connect. The other aspects of the bioprocess unit **1010** which involve the actual process are not shown here to limit the discussion to the aspects related to monitoring of the one or more properties of the fluid including fluid flow. The bioprocessing system may e.g. comprise a chromatography system, a filtration system and/or a bioreactor.

As shown in FIG. 10, a Coriolis flow meter **1020** is coupled to the inlet process connect and the outlet process connect of the bioprocess unit **1010.** The Coriolis flow meter **1020** referred herein has been described hereinabove in reference with FIGs. 2-9, and includes same components with the same functions. The bioprocessing system **1000,** further includes a monitoring unit **1030** that is configured for receiving the measurements representative of the one or more fluid properties of the fluid, from the Coriolis flow meter **1020** and configured to use the measurements to control the bioprocess in the bioprocess unit **1010.** All aspects of the Coriolis flow meter of FIGs. 2-9 are applicable in the embodiment of the bioprocessing system **1000.**

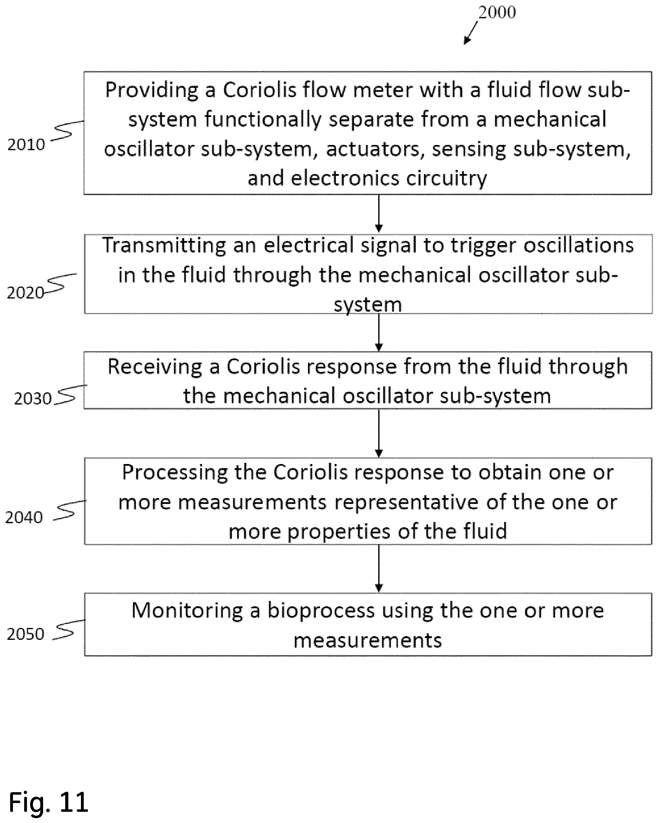

In yet another aspect, FIG. 11 illustrates a flowchart **2000** showing steps for a method for measuring one or more properties of a fluid including fluid flow using a Coriolis flow meter. The Coriolis flow meter referred herein has been described previously in reference to FIGs. 2-9. The method includes a step **2010** for providing the Coriolis flow meter with a fluid flow sub-system functionally separate from a mechanical oscillator sub-system, actuators, sensing sub-system and electronics circuitry. The method includes a step **2020** for transmitting an electrical signal to trigger oscillations in the fluid through the mechanical oscillator sub-system. The method includes a step **2030** for receiving a Coriolis response from the fluid through the mechanical oscillator sub-system; a step **2040** for processing the Coriolis response to obtain one or more measurements representative of the one or more properties of the fluid including fluid flow, and a step **2050** for monitoring a bioprocess using the one or more measurements.

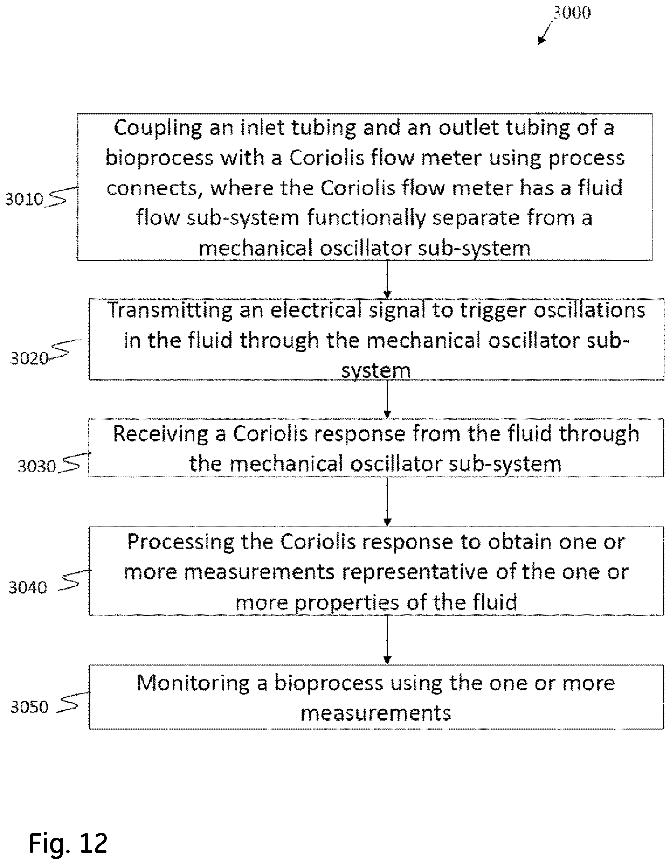

In yet another aspect, FIG. 12 illustrates a flowchart **3000** showing steps for a method for monitoring one or more properties of a fluid including fluid flow in a bioprocess of a bioprocessing system. The method includes a step **3010** for coupling an inlet tubing and an outlet tubing of a bioprocess with a Coriolis flow meter using process connects. The Coriolis flow meter referred herein has been described previously in reference to FIGs. 2-9. The method includes a step **3020** for transmitting an electrical signal to trigger oscillations in the fluid through the mechanical oscillator sub-system. The method includes a step **3030** for receiving a Coriolis response from the fluid through the mechanical oscillator sub-system. The method further includes a step **3040** for processing the Coriolis response to obtain one or more measurements representative of the one or more properties of the fluid including fluid flow, and a step **3050** for monitoring the bioprocess using the one or more measurements.

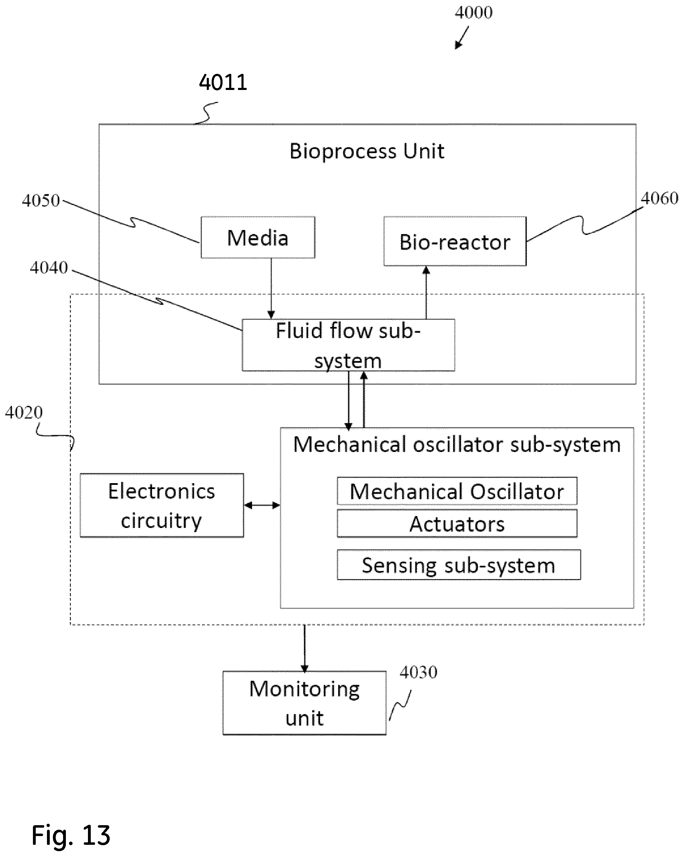

In yet another aspect, the beforementioned functional separation furthermore allows for the fluid containment of the superordinate process to be employed as fluid flow subsystem in the Coriolis flow meter, e.g. a pre-sterilized flexible tubing. FIG. 13 is another example embodiment **4000,** where the fluid flow subsystem **4040** of the Coriolis flow meter **4020** is an integral part of a bioprocess unit **4010** itself.

Referring to FIG. 1, the bioprocess unit **4010** is used for growing cell culture in a bio-reactor **4060,** and includes a media (block **4050)** which typically includes a fluid mixture of nutrients required for cell growth in the bio-reactor **4060.** The nutrient fluid is transferred to the bio-reactor **4060** through the fluid flow sub-system **4040,** which is a flow conduit, and part of the Coriolis flow meter **4020.**

It would be appreciated by those skilled in the art that the bioprocess unit may include several other components, for either upstream and downstream process input to or outputs from the bioreactor **4060.** For example, along with media which is primarily a fluid mixture of nutrients, a gas chamber that includes a fluid mixture of gases such as oxygen, nitrogen or carbon di-oxide may also be included that are required for the cell growth in the bioreactor **4060.** In this case, another flow conduit would be used to deliver the gases to the bioreactor, and this flow conduit would then be a part of the Coriolis flow meter, similar to the embodiment of FIG. 13. The embodiment of FIG. 13 also covers downstream processes like waste collection, cell chromatography, cell harvesting, cell clarification, cell purification, harvesting, capturing or purification of expressed biomolecules and the like where the flow conduit (and therefore, the fluid flow subsystem) would be between the bio-reactor and a chamber that receives the output from the bio-reactor for any of the downstream processes. The bio-reactor referred herein may be any of a stirred tank, rocking, single-use or multi-use bio-reactor, or any other type, that is used in the field of bioprocessing. Thus, the embodiment of FIG. 13, due to the modular configurations described in referenced to FIG. 2, and other embodiments hereinabove, allows a flow conduit of a bioprocess unit to be shared as the fluid flow subsystem of the Coriolis flowmeter, thus optimizing and simplifying the process of measurement of the properties of the fluid. The bioprocessing system may also be a dedicated system for downstream processing, including e.g. one or more chromatography systems and/or one or more filtration systems, such as one or more crossflow filtration systems.

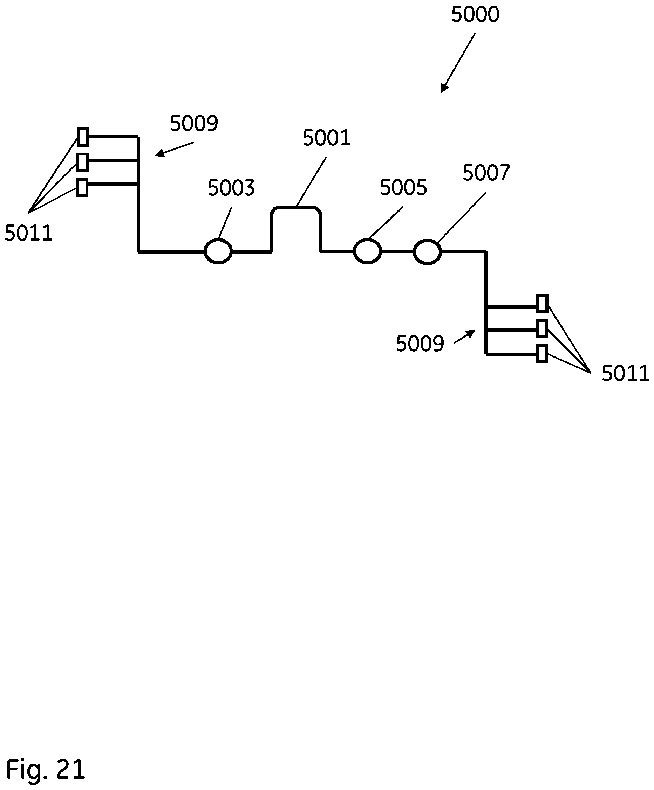

The different aspects described herein allow for optimal material choice for the mechanical oscillator with regards to the frequencies of the different oscillation modes, in order to achieve a high level of accuracy in the measurements. Furthermore, the design and material selection for the mechanical oscillator ensures that the impact of material choice for the flow conduit, on the oscillation behavior is limited due to the functional separation of the mechanical oscillator sub-system and the fluid flow sub-system in the embodiments described hereinabove. Thus, the oscillation characteristics are dominated by the material and the geometry of the mechanical oscillator, and only marginally influenced by the fluid containment, which improves the measurements for the fluid.
The invention further discloses a single use flow kit **5000** for a bioprocessing system, as illustrated in FIG. 21. This flow kit comprises a fluid flow sub-system **5001,** as discussed above, configured to be attached to a mechanical oscillator sub-system, which together form a Coriolis flow meter as discussed above. The flow kit also comprises at least one manifold **5009** fluidically connected to the fluid flow sub-system and at least one single use sensor component **5003,5005,5007** fluidically connected to the fluid flow sub-system. The flow kit may further comprise aseptic connectors **5011** as known in the art, e.g. ReadyMate^{™} (GE Healthcare) or KleenPak (Pall) for sterile connection to further fluidic systems or units. The kit may be presterilized, e.g. by gamma irradiation, and it may be delivered in a closed package.
The single use sensor component may e.g.comprise a flow cell **5003** with one or more transparent windows for measurement of visible or ultraviolet light absorption, which is useful e.g. for monitoring of protein concentrations. Additionally, or alternatively, the single use sensor component may comprise a single use pressure sensor **5005** as known in the art and available from e.g. PendoTECH. Conductivity (indicative of ionic strength) may be measured with a single use conductivity sensor **5007** as known in the art and available from e.g. SciLog or PendoTECH. The flow kit may further comprise a length of flexible tubing suitable for mounting in a peristaltic pump, and/or a single-use pump head for e.g. a centrifugal or membrane pump.
The flow kit may suitably comprise an instruction for attachment of the fluid flow sub-system to a mechanical oscillator sub-system of a Coriolis flow meter and for connecting the flow kit to a bioprocessing system, e.g. a chromatography or filtration system or a bioreactor. The fluid-contact materials of the flow kit can suitably be of grades compliant with the USP VI (US Pharmacopeia) requirements.

While only certain features of the invention have been illustrated and described herein, many modifications and changes will occur to those skilled in the art. It is, therefore, to be understood that the appended claims are intended to cover all such modifications and changes as fall within the scope of the invention defined by the appended claims.

## Claims

1. A bioprocessing system for monitoring one or more fluid properties of a fluid used in a bioprocess unit, the bioprocessing system comprising:
an inlet tubing and an outlet tubing of the bioprocess unit, wherein the inlet tubing is connected to an inlet process connect, and the outlet tubing is connected to an outlet process connect;
a Coriolis flow meter (100;200;400;500;600;700;800;820;900;1020;4020) coupled to the inlet process connect and the outlet process connect, wherein the Coriolis flow meter comprises:
a fluid flow sub-system (250;470;520;4040) to receive and retain the fluid in at least one flow conduit,
a mechanical oscillator sub-system (210) comprising:
a mechanical oscillator (230;410;510;620;710;830) linked with the fluid flow sub-system in a closed-loop arrangement for transmission of oscillations to the fluid and receipt of a Coriolis response from the fluid, one or more actuators (220;850;960), and a sensing sub-system (240), and
an electronics circuitry (300) coupled to the mechanical oscillator sub-system, and configured for obtaining one or more measurements representative of the one or more fluid properties of the fluid; and
a monitoring unit configured for receiving the measurements representative of the one or more fluid properties of the fluid, and configured to use the measurements to control the bioprocess, **characterised in that** the mechanical oscillator sub-system and the fluid flow sub-system are functionally separate.

2. The bioprocessing system of claim 1, wherein the mechanical oscillator sub-system, the fluid flow sub-system and the electronics circuitry are modular and allow modular integration.

3. The bioprocessing system of claim 1 or claim 2, wherein the fluid flow sub-system comprises at least one flow conduit to retain the fluid.

4. The bioprocessing system of claim 2 or claim 3, wherein the mechanical oscillator subsystem, comprises an open profile interface to hold the at least one flow conduit.

5. The bioprocessing system of claim 4, wherein the open profile interface comprises a plurality of receptacles to hold the at least one flow conduit.

6. The bioprocessing system of claim 5, wherein the open profile interface and the mechanical oscillator are a unitary unit.

7. The bioprocessing system of any of claims 1 to 6, wherein the one or more fluid properties comprise at least one of mass flow rate, density, or temperature of the fluid.

8. A method for monitoring one or more fluid properties of a fluid in a bioprocess of a bioprocessing system, the method comprising:
coupling an inlet tubing and an outlet tubing of a bioprocess with a Coriolis flow meter using process connects, wherein the Coriolis flow meter comprises:
a fluid flow sub-system to retain the fluid in at least one flow conduit,
a mechanical oscillator sub-system comprising:
a mechanical oscillator linked with the fluid flow sub-system in a closed-loop arrangement for transmission of oscillations to the fluid and receipt of a Coriolis response from the fluid, one or more actuators, and a sensing sub-system, and
an electronics circuitry coupled to the mechanical oscillator sub-system;
transmitting an electrical signal to trigger oscillations in the fluid through the mechanical oscillator sub-system;
receiving a Coriolis response from the fluid through the mechanical oscillator sub-system;
processing the Coriolis response to obtain one or more measurements representative of the one or more fluid properties of the fluid; and
monitoring the bioprocess using the one or more measurements,
wherein the one or more fluid properties comprise at least one of mass flow rate, density, or temperature of the fluid, and **characterised in that** the mechanical oscillator sub-system and the fluid flow sub-system are functionally separate.

9. The method of claim 8, wherein the mechanical oscillator sub-system comprises an open profile interface for holding the at least one flow conduit.

## Patentansprüche

1. Bioprozesssystem zum Überwachen einer oder mehrerer Fluideigenschaften eines Fluids, das in einer Bioprozesseinheit eingesetzt wird, das Bioprozesssystem umfassend:
einen Einlassschlauch und einen Auslassschlauch der Bioprozesseinheit, wobei der Einlassschlauch verbunden ist mit einer Einlassprozessverbindung und der Auslassschlauch verbunden ist mit einer Auslassprozessverbindung;
einen Coriolis-Durchflussmesser (100; 200; 400; 500; 600; 700; 800; 820; 900; 1020; 4020), gekoppelt mit der Einlassprozessverbindung und der Auslassprozessverbindung, wobei der Coriolis-Durchflussmesser umfasst:
ein Fluidströmungsuntersystem (250; 470; 520; 4040) zum Aufnehmen und Halten des Fluids in mindestens einer Strömungsleitung,
ein mechanisches Oszillatoruntersystem (210), umfassend: einen mechanischen Oszillator (230; 410; 510; 620; 710; 830), verbunden mit dem Fluidströmungsuntersystem in einer geschlossenen Kreislaufanordnung zum Übertragen von Oszillationen an das Fluid und Aufnehmen einer Coriolisantwort von dem Fluid, einem oder mehreren Aktuatoren (220; 850; 960) und einem Sensoruntersytem (240), und
einen elektronischen Schaltkreis (300), gekoppelt mit dem mechanischen Oszillatoruntersystem und dazu konfiguriert, einen oder mehrere Messwerte zu erhalten, die für die eine oder für die mehreren Fluideigenschaften des Fluids repräsentativ sind; und
eine Überwachungseinheit, konfiguriert zum Empfangen der Messwerte, die für die eine oder für die mehreren Fluideigenschaften des Fluids repräsentativ sind, und konfiguriert zum Verwenden der Messwerte zum Steuern des Bioprozesses, **dadurch gekennzeichnet, dass** das mechanische Oszillatoruntersystem und das Fluidströmungsuntersystem funktionell getrennt sind.

2. Bioprozesssystem nach Anspruch 1, wobei das mechanische Oszillatoruntersystem, das Fluidströmungsuntersystem und der elektronische Schaltkreis modular sind und eine modulare Integration ermöglichen.

3. Bioprozesssystem nach Anspruch 1 oder 2, wobei das Fluidströmungsuntersystem mindestens eine Strömungsleitung umfasst, um das Fluid zu halten.

4. Bioprozesssystem nach Anspruch 2 oder 3, wobei das mechanische Oszillatoruntersystem eine Schnittstelle mit offenem Profil umfasst, um die mindestens eine Strömungsleitung aufzunehmen

5. Bioprozesssystem nach Anspruch 4, wobei die Schnittstelle mit offenem Profil eine Vielzahl von Aufnahmen umfasst, um die mindestens eine Strömungsleitung aufzunehmen

6. Bioprozesssystem nach Anspruch 5, wobei die Schnittstelle mit offenem Profil und der mechanische Oszillator eine Einheit sind.

7. Bioprozesssystem nach einem der Ansprüche 1 bis 6, wobei die eine oder die mehreren Fluideigenschaften Massenstromrate, Dichte und/oder Temperatur des Fluids umfassen.

8. Verfahren zum Überwachen von einer oder mehreren Fluideigenschaften eines Fluids in einem Bioprozess eines Bioprozesssystems, das Verfahren umfassend:
Koppeln eines Einlassschlauchs und eines Auslassschlauchs eines Bioprozesses mit einem Coriolis-Durchflussmesser unter Einsatz von Prozessverbindungen, wobei der Coriolis-Durchflussmesser umfasst:
ein Fluidströmungsuntersystem zum Halten des Fluids in mindestens einer Strömungsleitung,
ein mechanisches Oszillatoruntersystem, umfassend:
einen mechanischen Oszillator in Verbindung mit dem Fluidströmungsuntersystem zum Übertragen von Oszillationen in das Fluid und zum Empfangen einer Coriolisantwort von dem Fluid, einem oder mehreren Aktuatoren und einem Sensoruntersystem, und
einen elektronischen Schaltkreis, gekoppelt mit dem mechanischen Oszillatoruntersystem;
Übermitteln eines elektrischen Signals zum Auslösen von Oszillationen in dem Fluid durch das mechanische Oszillatoruntersystem;
Empfangen einer Coriolisantwort von dem Fluid durch das mechanische Oszillatoruntersystem;
Verarbeiten der Coriolisantwort zum Erhalten eines oder mehrerer Messwerte, die der einen oder den mehreren Fluideigenschaften des Fluids entsprechen; und
Überwachen des Bioprozesses unter Einsatz des einen oder der mehreren Messwerte,
wobei die eine oder die mehreren Fluideigenschaften Massenstromrate, Dichte und/oder Temperatur des Fluids umfassen, und **dadurch gekennzeichnet, dass** das mechanische Oszillatoruntersystem und das Fluidströmungsuntersystem funktionell getrennt sind.

9. Verfahren nach Anspruch 8, wobei das mechanische Oszillatoruntersystem eine Schnittstelle mit offenem Profil umfasst, um die mindestens eine Strömungsleitung aufzunehmen.

## Revendications

1. Système de biotraitement destiné à surveiller une ou plusieurs propriétés de fluide d'un fluide utilisé dans une unité de bioprocédé, le système de biotraitement comprenant :
un tube d'entrée et un tube de sortie de l'unité de bioprocédé, le tube d'entrée étant raccordé à un raccord de procédé d'entrée, et le tube de sortie étant raccordé à un raccord de procédé de sortie ;
un débitmètre de Coriolis (100 ; 200 ; 400 ; 500 ; 600 ; 700 ; 800 ; 820 ; 900 ; 1020 ; 4020) couplé au raccord de procédé d'entrée et au raccord de procédé de sortie, le débitmètre de Coriolis comprenant :
un sous-système d'écoulement de fluide (250 ; 470 ; 520 ; 4040) pour recevoir et retenir le fluide dans au moins une conduite d'écoulement,
un sous-système d'oscillations mécaniques (210) comprenant :
un oscillateur mécanique (230 ; 410 ; 510 ; 620 ; 710 ; 830) relié au sous-système d'écoulement de fluide dans un agencement de boucle fermée pour la transmission d'oscillations au fluide et la réception d'une réponse de Coriolis depuis le fluide, un ou plusieurs actionneurs (220 ; 850 ; 960), et un sous-système de détection (240),
et
des circuits électroniques (300) couplés au sous-système d'oscillations mécaniques, et configurés pour obtenir une ou plusieurs mesures représentatives de la ou des propriétés de fluide du fluide ; et
une unité de surveillance configurée pour recevoir les mesures représentatives de la ou des propriétés de fluide du fluide, et configurée pour utiliser les mesures pour contrôler le bioprocédé, **caractérisé en ce que** le sous-système d'oscillations mécaniques et le sous-système d'écoulement de fluide sont fonctionnellement séparés.

2. Système de biotraitement selon la revendication 1, dans lequel le sous-système d'oscillations mécaniques, le sous-système d'écoulement de fluide et les circuits électroniques sont modulaires et permettent une intégration modulaire.

3. Système de biotraitement selon la revendication 1 ou la revendication 2, dans lequel le sous-système d'écoulement de fluide comprend au moins une conduite d'écoulement pour retenir le fluide.

4. Système de biotraitement selon la revendication 2 ou la revendication 3, dans lequel le sous-système d'oscillations mécaniques comprend une interface à profil ouvert pour contenir l'au moins une conduite d'écoulement.

5. Système de biotraitement selon la revendication 4, dans lequel l'interface à profil ouvert comprend une pluralité de récipients pour contenir l'au moins une conduite d'écoulement.

6. Système de biotraitement selon la revendication 5, dans lequel l'interface à profil ouvert et l'oscillateur mécanique constituent une unité unitaire.

7. Système de biotraitement selon l'une quelconque des revendications 1 à 6, dans lequel la ou les propriétés de fluide en comprennent au moins une parmi le débit massique, la masse volumique et la température du fluide.

8. Procédé destiné à surveiller une ou plusieurs propriétés de fluide d'un fluide dans un bioprocédé d'un système de biotraitement, le procédé comprenant :
le couplage d'un tube d'entrée et d'un tube de sortie d'un bioprocédé à un débitmètre de Coriolis au moyen de raccords de procédé, le débitmètre de Coriolis comprenant :
un sous-système d'écoulement de fluide pour retenir le fluide dans au moins une conduite d'écoulement,
un sous-système d'oscillations mécaniques comprenant :
un oscillateur mécanique relié au sous-système d'écoulement de fluide dans un agencement de boucle fermée pour la transmission d'oscillations au fluide et la réception d'une réponse de Coriolis depuis le fluide, un ou plusieurs actionneurs, et un sous-système de détection, et
des circuits électroniques couplés au sous-système d'oscillations mécaniques ;
la transmission d'un signal électrique pour déclencher des oscillations dans le fluide par le biais du sous-système d'oscillations mécaniques ;
la réception d'une réponse de Coriolis depuis le fluide par le biais du sous-système d'oscillations mécaniques ;
le traitement de la réponse de Coriolis pour obtenir une ou plusieurs mesures représentatives de la ou des propriétés de fluide du fluide ; et
la surveillance du bioprocédé au moyen de la ou des mesures,
dans lequel la ou les propriétés de fluide en comprennent au moins une parmi le débit massique, la masse volumique et la température du fluide, et **caractérisé en ce que** le sous-système d'oscillations mécaniques et le sous-système d'écoulement de fluide sont fonctionnellement séparés.

9. Procédé selon la revendication 8, dans lequel le sous-système d'oscillations mécaniques comprend une interface à profil ouvert pour contenir l'au moins une conduite d'écoulement.
